# EUROPEAN PATENT SPECIFICATION

(11) **EP 0 985 279 B1**
(45) Date of publication and mention of the grant of the patent: **25.06.2008**
(21) Application number: 98913795.5
(22) Date of filing: 14.04.1998
(51) Int. Cl.: H04B 7/005

(54) **Procedure and system for limiting the power of a mobile station**
Verfahren und Gerät zur Dämpfung des Sendepegels einer mobilen Station
Procédé et appareil pour reduire la puissance d'emission d'une station mobile

(30) Priority: 14.04.1997 FI 971569
(43) Date of publication of application: 15.03.2000
(73) Proprietor: TeliaSonera Finland Oyj, 00510 Helsinki (FI)
(72) Inventor: HOKKANEN, Tuomo, FIN-00820 Helsinki (FI)
(74) Representative: Simmelvuo, Markku Kalevi
(86) International application number: PCT/FI1998/000328
(87) International publication number: WO 1998/049784

(56) References cited:
- EP-A- 0 507 480
- WO-A-95/24102
- WO-A-96/03812
- US-A- 5 465 399
- US-A- 5 542 111

## Description

The present invention relates to a procedure as defined in the preamble of claim 1 for limiting the power of a mobile station. Furthermore, the invention relates to a system as defined in the preamble of claim 9 for limiting the power of a mobile station.

At present, the effects of mobile telephones on health are being widely investigated. A special concern is that the microwave radiation emitted by a mobile telephone might be a risk to human health, especially to the human brain. Therefore, stricter standards regarding the microwave radiation and transmission power of mobile telephones are likely to be applied in the future. Telephone manufacturers will have to develop aerial solutions that meet the new standards. As for existing telephones which have been in use for several years, problems will arise. At worst, the power of mobile telephone systems will have to be reduced. However, it seems likely that, especially in GSM (Global System for Mobile Communications) based systems, even with the present power levels, there will be terminals above and below the health standards. It would be unreasonable to reduce the transmission power of all mobile telephones, at the same time impairing the quality of service for all terminals. Thus, the problem is that with current technology it is impossible to take into account the differences between mobile telephones, which means that a power limit would reduce the operating range of all mobile telephones. Furthermore, to maintain the present service area, the operators would have to make increasing investments in the radio network to be able to maintain the present level of service.

EP 507480 discloses a network of wireless communication devices, wherein each device has a unit for transmitting information, a unit for variably controlling the transmission power for transmission of information, a unit for receiving information transmitted, and a unit for controlling the other units. Each device shifts the transmission power to a level proper to a current receiver device. The drawback of D1 is that it limits the operating range of the base station as it adjusts the transmission power according to the mobile device that needs the biggest transmission power.

The object of the present invention is to eliminate the drawbacks described above.

A specific object of the present invention is to disclose a procedure and a system in which the transmission power to be used can be limited separately for each terminal device. A further object of the invention is to create a system in which both existing mobile telephones and mobile telephones of a new type can be used without significantly impairing the quality of service.

As for the features characteristic of the invention, reference is made to the claims.

In the procedure of the invention for controlling the power of a mobile station in a data communication system comprising a mobile communication network, such as a GSM or NMT network, the power of the radio signal fed to the aerial or equivalent of a mobile station is reduced to minimise the unwholesome effects of the microwave radiation generated by the radio signal. The GSM network preferably comprises a home location register (HLR, Home Location Register), which contains customer-specific basic data, such as the right of access and the functions available to the subscriber. Moreover, the mobile communication network comprises a visitor location register (VLR, Visitor Location Register), to which the mobile station or subscriber reports on entering the area of a given mobile services switching centre. On receiving the report, the mobile services switching centre retrieves the subscriber and mobile station specific information from the home location register and sends it to the visitor location register of its own area and at the same time updates the location data for the subscriber.

According to the invention, data relating to the transmission power of the mobile station are stored in the mobile communication network separately for each mobile station, the device data for the mobile station are received in the mobile communication network in conjunction with call setup, the transmission power data for the mobile station are checked and the transmission power of the mobile station is controlled on the basis of a predetermined power control algorithm and the device data for the mobile station. The mobile station can preferably be identified by an IMBI code (IMBI, International Mobile Station Equipment Identity) or an IMSI code (IMSI, International Mould Subscriber Identity). In this case, however, each IMEI and/or IMSI code can be associated with data relating to the terminal device in question, such as a power level consistent with the safety standards.

In a preferred embodiment of the present invention, the transmission power data stored for the mobile station includes a maximum allowed transmission power of the mobile station. On the other hand, it is also possible to store a maximum allowed value of a time integral of the transmission power of the mobile station. The transmission power data stored may also include power levels that differ from the power levels in the network as a whole. In some situations it may also be necessary to define a minimum power level, in which case, when the power level for the whole network is reduced, the power of terminal devices with a minimum power level defined will remain unchanged. Such terminals could include devices operated without a human user near them, e.g. terminal devices installed in conjunction with certain machines or appliances.

The transmission power data can preferably be stored in the HLR register and/or in a MSC/VLR element (MSC, Mobile Services Switching Centre) of the mobile communication network.

In a preferred embodiment of the present invention, the maximum and/or the mean value of the transmission power of the mobile station is/are monitored in a given period of time, the monitored value is compared with a predetermined limit or threshold value and, if the limit is exceeded, the call is disconnected. On the other hand, the mobile station can be switched to a lower power level, especially in an NMT network, even if no actual power regulation is used. This makes it possible to limit the amount of unwholesome radiation emitted by the mobile station.

As compared with prior art, the present invention has the advantage that the invention allows a mobile communication network, such as a GSM network, to be adapted to a reduction of transmission power levels that may be required in the future because of stricter health standards for RF transmissions. Further, the invention allows parallel use in the same mobile communication network of both new terminals consistent with the standards and existing terminals of the present generation that may exceed the future health standards.

A further advantage of the invention as compared with prior art is that the invention provides a handy way of limiting the power levels by limiting the level of transmission power of only those mobile stations for which a limitation is necessary. Furthermore, the invention makes it possible for operators to use the existing wireless network even in the future while still offering the users the present level of service.

The system of the invention for controlling the transmission power of a mobile station in a mobile communication system comprises a mobile communication network. The system is used to regulate the power of the radio signal fed into the aerial or equivalent of the mobile station to minimise unwholesome effects and it comprises storage means for storing in the mobile communication network mobile station-specific transmission power data substantially relating to transmission power, a receiver in the mobile communication network for receiving device data identifying the mobile station in conjunction with call setup, means for checking the transmission power data for the mobile station and controlling the transmission power of the mobile station on the basis of a predetermined power control algorithm and the device data for the mobile station. The above-mentioned means can be implemented using appropriate components in the telecommunication network.

In a preferred embodiment of the present invention, the transmission power data stored for the mobile station includes a maximum allowed transmission power (Pₒᵤₜ₍ₘₐₓ₎), a minimum transmission power (Pₒᵤₜ₍ₘᵢₙ₎) to be used and/or a desired constant power (P_{out(con)}). Thus, the operator can set the transmission power to a desired level separately for each mobile station.

In the following, the invention will be described in detail by the aid of a few examples of its preferred embodiments by referring to the attached drawing, in which
Fig. 1 presents a diagram representing a system according to the present invention; and
Fig. 2 presents two graphs drawn on a power/time co-ordinate system.

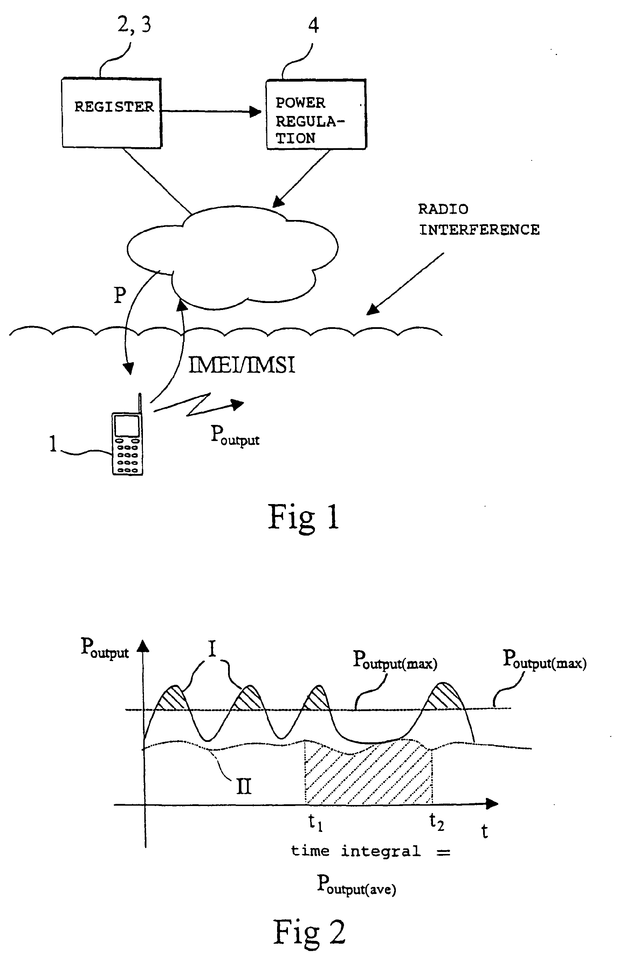

The system presented in Fig. 1 comprises a mobile communication network, a GSM network, and a register connected to it, which may be a HLR or VLR register and which may be located in any component of the GSM network. Further, the GSM network is provided with a power regulation algorithm, which is used to determine the magnitude of the transmission power Pₒᵤₜₚᵤₜ of the mobile station. In addition, Fig. 1 shows a mobile station 1 with a radio signal, represented by a line with an arrowhead, transmitted from its aerial at a power level of Pₒᵤₜₚᵤₜ, which may be of a level detrimental to health. Furthermore, Fig. 1 shows a so-called radio interface, over which the mobile station 1 communicates with the GSM network. Although in Fig. 1 both the register and the power regulation unit are depicted as separate components, it is obvious that they can be integrated in the normal manner in the mobile communication network. Let it be further stated that the procedure of the invention is used to control the transmission power in the so-called uplink channel, i.e. the power of the signal transmitted from the mobile station to the base station.

Fig. 2 shows two graphs, the first one I of which and the associated broken line form a coherent whole and the second one II and the associated area shaded with broken lines form another coherent whole. In the first case, the horizontal broken line represents the P_{output (max)} value of the uplink channel, which is a predetermined threshold value for the output power of a mobile station. As is clearly visible from the Figure, the maximum output power is exceeded four times. In this case, the output power value can be limited e.g. in steps of 2 dBm or the call can even be disconnected. The power is monitored by measuring the transmission power Pₒᵤₜₚᵤₜ of the mobile station. When the power exceeds or is close to the predetermined limit, a control command is sent to the mobile station, causing the mobile station to reduce its transmission power in the uplink channel. The horizontal broken line could also represent a minimum value that the transmission power of the mobile station must reach.

In the latter case II, the figure presents another power graph, illustrating the variation in the transmission power of the mobile station in another case. Further, the figure shows an area shaded with broken lines, representing a time integral calculated for the time interval t₁ - t₂ with respect to power. The integral obtained is again compared with a predetermined value Pₒᵤₜₚᵤₜ₍ₐᵥₑ₎, and if it is established that the limit value is exceeded, then a power control command is sent to the mobile station, causing the mobile station either to stop transmitting, i.e. to disconnect the call, or to reduce its transmission power in the uplink direction.

In summary, referring to Fig. 1 and 2, a preferred example of power control is presented. When the mobile station starts a new call or when the mobile communication network is setting up a new call to the mobile station, i.e. generally in conjunction with call setup, the mobile station sends to the mobile communication network e.g. its IMEI or IMSI code, which is stored by the mobile communication network as data identifying the mobile station. During the call, based on the code received, the transmission power data for the mobile station, i.e. data indicating whether the transmission power of the mobile station has to be separately controlled or whether the mobile station is a new-generation device with built-in regulation of transmission power in accordance with safety standards, is retrieved from the HLR or VLR register. The transmission power data obtained is used as input to a power regulation algorithm, which monitors the transmission power Pₒᵤₜₚᵤₜ of the mobile station and, based on this monitoring, controls the transmission power of the mobile station by means of transmission power commands given over the radio interface.

The invention is not restricted to the examples of its embodiments described above, but many variations are possible within the scope of the inventive idea defined by the claims.

## Claims

1. Procedure for controlling the power of each mobile station in a mobile communication system comprising:
a mobile communication network, the procedure comprising the steps of:
receiving in the mobile communication network, first device data sent by the mobile device identifying said mobile station in conjunction with call setup, and
regulating the power of the radio signal fed into the aerial or equivalent of the mobile station according to a control signal from said mobile communication network,
**characterized in that** the procedure further comprises the steps of:
storing second device data in association with said first device data in mobile communication network indicating whether the mobile station comprises built-in regulation of transmission power for each mobile station separately, wherein the second device data includes an upper limit - of the transmission power into the mobile communication network separately for each mobile station not comprising built-in regulation of transmission power, and
controlling the transmission power on the basis of a-predetermined power control algorithm and said upper limit for each mobile station not comprising built-in regulation of transmission power.

2. Procedure as defined in claim 1, **characterized in that** the mobile station is identified on the basis of an International Mobile Equipment Identity [IMEI] device code and/or an International Mobile Subscriber Identity [IMSI] code.

3. Procedure as defined in claim 1 or 2, **characterized in that** said second device data stored for the mobile station further includes a minimum transmission power (P_{output (min)}) to be used and/or a desired constant power (P_{output(con)}) of the mobile station.

4. Procedure as defined in claim 1 or 2, **characterized in that** said second device data stored for the mobile station includes the highest allowed mean transmission power value in a given time.

5. Procedure as defined in any one of claims 1 - 4, **characterized in that** said second device data is stored in a Home Location Register [HLR], Visitor Location Register [VLR] or Mobile-services Switching Center [MSC] element of the mobile communication network.

6. Procedure as defined in any one of claims 1 - 5, **characterized in that** the maximum and/or the mean value of the transmission power of the mobile station is/are monitored in a given period of time, said values are compared with a predetermined limit value and, if the limit is exceeded, the call is disconnected.

7. Procedure as defined in any one of claims 1 - 6, **characterized in that** the mobile communication network is a GSM network.

8. Procedure as defined in any one of claims 1 - 6, **characterized in that** the mobile communication network is an NMT network.

9. System for controlling the transmission power of a plurality of mobile stations*,* system comprising:
a mobile communication network, and
a receiver (3) in the mobile communication network for receiving first device data sent by each of said plurality of mobile stations identifying said mobile station in conjunction with call setup,
**characterized in that** the system further comprises:
storage means (2) in the mobile communication network for storing second device data in association with said first device data in mobile communication network indicating whether the mobile station comprises built-in regulation of transmission power for each mobile station separately, wherein the second device data includes an upper limit of the transmission power into the mobile communication network separately for each mobile station not comprising built-in regulation of transmission power;
means (4) for controlling the transmission power of each mobile station on the basis of a predetermined power control algorithm and said upper limit for each mobile station not comprising built-in regulation of transmission power.

10. System as defined in claim 9, **characterized in that** said mobile communication network is adapted to identify the mobile station by means of an International Mobile Equipment Identity [IMEI] device code and/or an International Mobile Subscriber Identity [IMSI] code.

11. System as defined in claim 9 or 10, **characterized in that** said mobile communication network is adapted to store said second device data further comprising a minimum transmission power (Pₒᵤₜ₍ₘᵢₙ₎) to be used and/or a desired constant power (P_{out(con)}) of the mobile station.

12. System as defined in claim 9 or 10, **characterized in that** said mobile communication network is adapted to store said second device data comprising a highest and/or lowest allowed mean value of transmission power in a given time.

13. System as defined in any one of the preceding claims 9 - 12, **characterized in that** the storage means are located in a Home Location Register [HLR], Visitor Location Register [VLR] or Mobile-services Switching Center [MSC] of the mobile communication network.

14. System as defined in any one of claims 9 - 13, **characterized in that** the mobile communication network is arranged to monitor maximum and/or the mean value of the transmission power of the mobile station in a given period of time, to compare said values with a predetermined limit value and, if the limit is exceeded, to disconnect the call.

## Patentansprüche

1. Verfahren zum Steuern der Leistung jedes Mobiltelefons in einem mobilen Kommunikationssystem, welches aufweist:
ein Mobilkommunikationsnetz, wobei das Verfahren die folgenden Schritte aufweist:
Empfangen erster Einrichtung- bzw. Geräte-Daten in dem Mobilkommunikationsnetz, welche durch die mobile Einrichtung gesendet werden, welche das Mobiltelefon in Verbindung mit dem Erstellen eines Anrufs identifizieren, und
Regulieren der Leistung des Funksignals, welche durch das in der Luft befindliche oder Äquivalent des Mobiltelefons gespeist ist, entsprechend einem Steuersignal von dem Mobilkommunikationsnetz, **dadurch gekennzeichnet, dass** das Verfahren ferner die folgenden Schritte aufweist:
Speichern von zweiten Geräte-Daten in Verbindung mit den ersten Geräte-Daten im mobilen Kommunikationsnetz, welche anzeigen, ob das Mobiltelefon eine eingebaute Regulierung der Übertragungsleistung für jedes Mobiltelefon getrennt aufweist, wobei die zweiten Geräte-Daten einen oberen Grenzwert der Übertragungsleistung in das mobile Kommunikationsnetz für jedes Mobiltelefon getrennt beinhalten, welches keine eingebaute Regulierung der Übertragungsleistung aufweist, und
Steuern der Übertragungsleistung auf der Grundlage eines vorher festgelegten Leistungssteueralgorithmus und des oberen Grenzwertes für jedes Mobiltelefon, welches keine eingebaute Regulierung der Übertragungsleistung aufweist.

2. Verfahren nach Anspruch 1, **dadurch gekennzeichnet, dass** das Mobiltelefon auf der Grundlage eines internationalen Mobilgeräte-Identifizierungs-(IMEI-)Geräte-Codes und/oder eines internationalen Mobilteilnehmer-Identitäts-(IMSI-) Codes identifiziert wird.

3. Verfahren nach Anspruch 1 oder 2, **dadurch gekennzeichnet, dass** die zweiten Geräte-Daten, welche für das Mobiltelefon gespeichert sind, ferner eine minimale Übertragungsleistung (Pₒᵤₜₚᵤₜ₍ₘᵢₙ₎ bzw. P_{Ausgang(min)}), welche zu benutzen ist, und/oder eine gewünschte konstante Leistung (P_{output(con)} bzw. P_{Ausgang(con)}) des Mobiltelefons beinhalten.

4. Verfahren nach Anspruch 1 oder 2, **dadurch gekennzeichnet, dass** die zweiten Geräte-Daten, welche für das Mobiltelefon gespeichert sind, den höchsten zulässigen durchschnittlichen Übertragungsleistungswert in einer gegebenen Zeit beinhalten.

5. Verfahren nach einem der Ansprüche 1 bis 4, **dadurch gekennzeichnet, dass** die zweiten Geräte-Daten in einem Heimatregister (HLR), einem Besucherregister (VLR) oder einem Mobildienst-Vermittlungszentrum-(MSC-)Element des Mobilkommunikationsnetzes gespeichert werden.

6. Verfahren nach einem der Ansprüche 1 bis 5, **dadurch gekennzeichnet, dass** der Maximal- und/oder der Durchschnittswert der Übertragungsleistung des Mobiltelefons in einer gegebenen Zeitperiode überwacht wird/werden, wobei die Werte mit einem vorher festgelegten Grenzwert verglichen werden, und, falls der Grenzwert überschritten wird, der Anruf unterbrochen wird.

7. Verfahren nach einem der Ansprüche 1 bis 6, **dadurch gekennzeichnet, dass** das mobile Kommunikationsnetz ein GSM-Netz ist.

8. Verfahren nach einem der Ansprüche 1 bis 6, **dadurch gekennzeichnet, dass** das mobile Kommunikationsnetz ein NMT-Netz ist.

9. System zum Steuern der Übertragungsleistung einer Vielzahl von Mobiltelefonen, wobei das System aufweist:
ein Mobilkommunikationsnetz, und
einen Empfänger (3) in dem Mobilkommunikationsnetz zum Empfangen erster Geräte-Daten, welche durch jedes aus der Vielzahl von Mobiltelefonen gesendet werden, welche das Mobiltelefon in Verbindung mit dem Erstellen eines Anrufs identifiziert, **dadurch gekennzeichnet, dass** das System ferner aufweist:
eine Speichereinrichtung (2) in dem Mobilkommunikationsnetz, um zweite Geräte-Daten in Zusammenhang mit den ersten Geräte-Daten in dem Mobilkommunikationsnetz zu speichern, welche anzeigen, ob das Mobiltelefon eine eingebaute Regulierung der Übertragungsleistung für jedes Mobiltelefon getrennt aufweist, wobei die zweiten Geräte-Daten einen oberen Grenzwert der Übertragungsleistung in das Mobilkommunikationsnetz für jedes Mobiltelefon getrennt aufweisen, welches keine eingebaute Regulierung der Übertragungsleistung aufweist;
eine Vorrichtung (4) zum Steuern der Übertragungsleistung jedes Mobiltelefons auf der Grundlage eines vorher festgelegten Leistungssteueralgorithmus und des oberen Grenzwertes für jedes Mobiltelefon, welches nicht eine eingebaute Regulierung der Übertragungsleistung aufweist.

10. System nach Anspruch 9, **dadurch gekennzeichnet, dass** das Mobilkommunikationsnetz geeignet ist, das Mobiltelefon mit Hilfe eines internationalen Mobilgeräte-Identitäts-(IMEI-) Geräte-Codes und/oder eines internationalen Mobilteilnehmer-Identitäts-(IMSI-)Codes zu identifizieren.

11. System nach Anspruch 9 oder 10, **dadurch gekennzeichnet, dass** das Mobilkommunikationsnetz geeignet ist, die zweiten Geräte-Daten zu speichern, welche ferner eine minimale Übertragungsleistung (Pₒᵤₜ₍ₘᵢₙ₎ bzw. Pₐᵤₛ₍ₘᵢₙ₎), welche zu benutzen ist, und/oder eine gewünschte konstante Leistung (Pout(con) bzw. P_{aus(con)}) des Mobiltelefons aufweisen.

12. System nach Anspruch 9 oder 10, **dadurch gekennzeichnet, dass** das Mobilkommunikationsnetz geeignet ist, diese zweiten Geräte-Daten zu speichern, wobei diese einen höchsten und/oder niedrigsten zulässigen Durchschnittswert der Übertragungsleistung in einer gegebenen Zeit aufweisen.

13. System nach einem der vorausgehenden Ansprüche 9 bis 12, **dadurch gekennzeichnet, dass** die Speichereinrichtung in einem Heimatregister (HLR), einem Besucherregister (VLR) oder einem Mobildienst-Vermittlungszentrum (MSC) des Mobilkommunikationsnetzes platziert ist.

14. System nach einem der Ansprüche 9 bis 13, **dadurch gekennzeichnet, dass** das Mobilkommunikationsnetz angeordnet ist, um den Maximal- und/oder den Durchschnittswert der Übertragungsleistung des Mobiltelefons in einer gegebenen Zeitperiode zu überwachen, diesen Werte mit einem vorher festgelegten Grenzwert zu vergleichen, und, falls der Grenzwert überschritten wird, den Anruf zu unterbrechen.

## Revendications

1. Procédure pour commander la puissance de chaque station mobile dans un système de communication mobile comprenant :
un réseau de communication mobile, la procédure comprenant les étapes consistant à :
recevoir dans le réseau de communication mobile, des premières données de dispositif envoyées par le dispositif mobile identifiant ladite station mobile conjointement avec l'établissement d'un appel, et
réguler la puissance du signal radio rayonnée dans l'antenne ou équivalent de la station mobile selon un signal de commande en provenance dudit réseau de communication mobile, **caractérisée en ce que** la procédure comprend en outre les étapes consistant à :
stocker des secondes données de dispositif en association avec lesdites premières données de dispositif dans le réseau de communication mobile indiquant si la station mobile comprend une régulation incorporée de la puissance d'émission pour chaque station mobile séparément, où les secondes données de dispositif comprennent une limite supérieure de la puissance d'émission dans le réseau de communication mobile séparément pour chaque station mobile ne comprenant pas de régulation incorporée de la puissance d'émission, et
commander la puissance d'émission sur la base d'un algorithme de commande de puissance prédéterminé et de ladite limite supérieure pour chaque station mobile ne comprenant pas de régulation incorporée de la puissance d'émission.

2. Procédure selon la revendication 1, **caractérisée en ce que** la station mobile est identifiée sur la base d'un code de dispositif d'identité internationale d'équipement mobile [IMEI] et/ou d'un code d'identité internationale d'abonné mobile [IMSI].

3. Procédure selon la revendication 1 ou 2, **caractérisée en ce que** lesdites secondes données de dispositif stockées pour la station mobile comprennent en outre une puissance d'émission minimum (P_{output (min)}) devant être utilisée et/ou une puissance constante souhaitée (P_{output (con)}) de la station mobile.

4. Procédure selon la revendication 1 ou 2, **caractérisée en ce que** lesdites secondes données de dispositif stockées pour la station mobile comprennent la valeur de la puissance d'émission moyenne la plus élevée autorisée dans un temps donné.

5. Procédure selon l'une quelconque des revendications 1 à 4, **caractérisée en ce que** lesdites secondes données de dispositif sont stockées dans un élément enregistreur de localisation nominal [HLR], enregistreur de localisation des visiteurs [VLR] ou centre de commutation de services mobiles [MSC] du réseau de communication mobile.

6. Procédure selon l'une quelconque des revendications 1 à 5, **caractérisée en ce que** la valeur maximum et/ou moyenne de la puissance d'émission de la station mobile est/sont surveillée(s) dans une période de temps donnée, lesdites valeurs sont comparées à une valeur limite prédéterminée et, si la limite est dépassée, l'appel est déconnecté.

7. Procédure selon l'une quelconque des revendications 1 à 6, **caractérisée en ce que** le réseau de communication mobile est un réseau GSM.

8. Procédure selon l'une quelconque des revendications 1 à 6, **caractérisée en ce que** le réseau de communication mobile est un réseau NMT.

9. Système pour commander la puissance d'émission d'une pluralité de stations mobiles, ledit système comprenant :
un réseau de communication mobile, et
un récepteur (3) dans le réseau de communication mobile pour recevoir des premières données de dispositif envoyées par chacune de ladite pluralité de stations mobiles identifiant ladite station mobile conjointement avec l'établissement d'un appel, **caractérisé en ce que** le système comprend en outre :
des moyens de stockage (2) dans le réseau de communication mobile pour stocker des secondes données de dispositif en association avec lesdites premières données de dispositif dans le réseau de communication mobile indiquant si la station mobile comprend une régulation incorporée de la puissance d'émission pour chaque station mobile séparément, où les secondes données de dispositif comprennent une limite supérieure de la puissance d'émission dans le réseau de communication mobile séparément pour chaque station mobile ne comprenant pas de régulation incorporée de la puissance d'émission ;
des moyens (4) pour commander la puissance d'émission de chaque station mobile sur la base d'un algorithme de commande de puissance prédéterminé et de ladite limite supérieure pour chaque station mobile ne comprenant pas de régulation incorporée de la puissance d'émission.

10. Système selon la revendication 9, **caractérisé en ce que** ledit réseau de communication mobile est adapté pour identifier la station mobile au moyen d'un code de dispositif d'identité internationale d'équipement mobile [IMEI] et/ou d'un code d'identité internationale d'abonné mobile [IMSI].

11. Système selon la revendication 9 ou 10, **caractérisé en ce que** ledit réseau de communication mobile est adapté pour stocker lesdites secondes données de dispositif comprenant en outre une puissance d'émission minimum (P_{out (min)}) devant être utilisée et/ou une puissance constante souhaitée (P_{out (con)}) de la station mobile.

12. Système selon la revendication 9 ou 10, **caractérisé en ce que** ledit réseau de communication mobile est adapté pour stocker lesdites secondes données de dispositif comprenant une valeur moyenne la plus élevée et/ou la plus faible autorisée de la puissance d'émission dans un temps donné.

13. Système selon l'une quelconque des revendications 9 à 12, **caractérisé en ce que** les moyens de stockage sont localisés dans un enregistreur de localisation nominal [HLR], un enregistreur de localisation des visiteurs [VLR] ou un centre de commutation de services mobiles [MSC] du réseau de communication mobile.

14. Système selon l'une quelconque des revendications 9 à 13, **caractérisé en ce que** le réseau de communication mobile est agencé pour surveiller la valeur maximum et/ou moyenne de la puissance d'émission de la station mobile dans une période de temps donnée, pour comparer lesdites valeurs à une valeur limite prédéterminée et, si la limite est dépassée, pour déconnecter l'appel.
